# EUROPEAN PATENT APPLICATION

(11) **EP 4 258 051 A1**
(43) Date of publication of application: **11.10.2023**
(21) Application number: 22167479.9
(22) Date of filing: 08.04.2022
(51) Int. Cl.: G02F 1/35, H01S 3/067, G02F 1/365

(54) **TUNABLE SUPERCONTINUUM SYSTEM**

(71) Applicant: NKT Photonics A/S, 3460 Birkerød (DK)
(72) Inventor: GIESSMANN JESPERSEN, Kim, 3460 Birkerød (DK); DENNINGER, Mark, 3460 Birkerød (DK); FEUCHTER, Thomas, 3460 Birkerød (DK)
(74) Representative: Zacco Denmark A/S

(57) **Abstract**

Disclosed is a tunable supercontinuum system, comprising: a supercontinuum-housing that integrates a supercontinuum-module, a first filter-module, and guiding optics into the supercontinuum-housing.

## Description

### Field of the invention

The present disclosure relates generally to a tunable supercontinuum system. More specifically, the present disclosure relates to a tunable supercontinuum system that comprises a housing, which integrates a supercontinuum module and a filter-module.

### Background

Tunable supercontinuum systems are known in the field of laser optics, and so are tunable supercontinuum systems that comprise a housing, which integrates a supercontinuum module configured to generate supercontinuum light and a filter-module to filter the light, such that the filter-module is responsible for providing the tunable supercontinuum system.

An example of such a system is disclosed in US 2002/0028044. In this disclosure, the filter-module is an acousto-optical tunable filter, which is configured such that the spectral composition of a spectrally broadened light can be adjusted. The output from the tunable system, as disclosed in US 2002/0028044, is adjustable such that the output-beam may be divergent, collimated or convergent. The system, as disclosed in US 2002/0028044, is used as an illumination system, such as for a microscope system, where the output-beam is directed onto an object to be inspected in the microscope system.

However, to use the tunable supercontinuum system in the microscope system as described above, it is required that the tunable supercontinuum system is integrated into the microscope system.

In some applications, it is desirable to provide a tunable supercontinuum system for an external system, where the tunable supercontinuum system is not required to be integrated into the external system.

Tunable supercontinuum systems as such are for example disclosed in US 2011/0222060 and US 2021/0063894.

However, in these disclosures, the tunable supercontinuum systems do not integrate the supercontinuum module configured to generate supercontinuum light and a filter-module to filter the light. On the contrary, the disclosed supercontinuum systems are modular and comprise a separate supercontinuum module housing and a separate filter module housing that are optically connected.

Connecting a separate filter-module housing to a separate supercontinuum-module is a common approach, particularly because it for example allows the user to change the supercontinuum-module housing, and/or the filter module housing, for example if one or more parts within the housing(s) fail(s) to operate.

Another modular and tunable supercontinuum system is disclosed in US 2021/0063894. In this disclosure, there is disclosed a modular tunable supercontinuum system that comprises a separate supercontinuum module housing and a separate filter-module housing that are optically connected via a fiber. Further, a delivery-fiber is connected to the separate filter-module housing, such that the delivery-fiber can be used in an external system.

To optically transmit and couple the light from the supercontinuum module to the delivery-fiber, the filter module is inside an optical manipulation unit that is configured to automatically coarse and fine align a set of optical components whereby the output from the filter module and the delivery-fiber is optimized.

This ensures that a user is not required to manually align the set of optical components. However, the setup requires an automated and complex setup which relies on a controller that needs optical feedback.

An alternative to using an automated setup as described above is to provide an optical manipulation unit that is configured to manually being aligned by a user, but of course, this may be difficult, and requires that the user is familiar with optical alignment.

There is a desire to provide a tunable supercontinuum system with a delivery-fiber that is alignment-free for a user, and which does not rely on a complex automated system.

### Summary

It is an objective of this disclosure to provide a tunable supercontinuum system that overcomes the problems of the prior art.

It is also an objective of this disclosure to provide a tunable supercontinuum system that is alignment-free for the user, and which does not rely on a complex automated system.

These and other objectives have been solved by the tunable supercontinuum system as defined in the claims and as described below in the present disclosure.

In one aspect of the disclosure, there is disclosed a tunable supercontinuum system, comprising:
- a supercontinuum-housing that integrates a supercontinuum-module, a first filter-module, and guiding optics into the supercontinuum-housing, such that the supercontinuum-housing comprises:
- the supercontinuum-module configured to generate supercontinuum light;
- the first filter-module configured to dynamically filter a first part of the supercontinuum light, such that after filtering with the first filter-module, the tunable supercontinuum system is configured to generate first filtered light, wherein the first filtered light has a filtered wavelength within the first part of the supercontinuum light, and the filtered wavelength has a minimum bandwidth and a minimum transmission, whereby the first filter-module provides the tunable supercontinuum system;
- the guiding optics for guiding at least the first filtered light towards a delivery-fiber.

The delivery-fiber is for providing an output for at least the first filtered light.

In a preferred embodiment, the guiding optics is configured to be pre-aligned inside the supercontinuum-housing such that the output through the delivery-fiber is provided.

The inventors of the present disclosure have discovered that by integrating the supercontinuum-module, the first filter-module, and the guiding optics into the supercontinuum-housing, it is possible to pre-align the guiding optics inside the supercontinuum-housing such that the output through the delivery-fiber is provided, particularly such that post-alignment is not required. In other words, the inventors of the present disclosure have found out how to provide a tunable supercontinuum system that maintains its pre-alignment of its guiding optics and maintains an optimized output from the delivery-fiber. Accordingly, by providing the integrated tunable supercontinuum system as described in the present disclosure, a tunable supercontinuum system that is alignment-free for the user is obtained. Furthermore, the integrated tunable supercontinuum system as described in the present disclosure does not rely on a complex automated system.

If the supercontinuum-module, the first filter module, and the guiding optics would have been separated into modular housings, then post-alignment, i.e. alignment after pre-alignment, would typically be required. This is for example due to mechanical connection-offsets between the modular housings. The prior art that teaches of modular housings, as described in the background, are examples of that.

As discussed in the background, US 2002/0028044 is an example disclosure of a tunable supercontinuum system that integrates a supercontinuum-module and a filter-module into a supercontinuum-housing - and is not made of modular housings. However, US 2002/0028044 does not provide guiding optics that is configured to be pre-aligned inside the supercontinuum-housing such that the output through a delivery-fiber is provided.

Typically, guiding optics for a delivery-fiber is placed inside a separate modular optical manipulation unit housing, as this is usually an add-on that a user connects to a supercontinuum-module, for example as the one disclosed in US 2021/0063894. The standard way of providing a delivery-fiber to a modular tunable supercontinuum system, such as disclosed in US 2021/0063894, or to a tunable supercontinuum system that integrates the supercontinuum-module and the filter-module, such as disclosed in US 2002/0028044, is by connecting a separate modular manipulation unit housing.

To provide guiding optics and a delivery-fiber according to the present disclosure, the guiding optics is configured to be pre-aligned inside the supercontinuum-housing, and thus placed inside the supercontinuum-housing. When the guiding optics is placed inside the supercontinuum-housing, the user is not able to easily access the guiding optics. Accordingly, the user is not able to easily post-align the guiding optics. For this reason, and because it has always been considered important for the user to provide post-alignment, it has previously not been practical or been considered to place the guiding optics inside the supercontinuum-housing of the supercontinuum system that has a delivery-fiber - as the present disclosure now proposes.

The inventors of the present disclosure have realized that it is possible to perform a pre-align inside the supercontinuum-housing, such as at the manufacturing site, particularly such that any post-alignment (for example by the user) is not required.

In a particular example of this, the inventors of the present disclosure have found, that when the delivery-fiber, in one embodiment, comprises an output coupler, such as an output collimator, and the output coupler has tight tolerances, it may be ensured that alignment of the guiding optics is made stable. The stability may, in one embodiment, be ensured because of the tight tolerances on the output coupler, and because the guiding optics accordingly is able to be locked in a very stable position and/or orientation, for example after pre-alignment at a factory site. Thus, in one embodiment of the presently disclosed tunable supercontinuum system, the guiding optics is configured to be locked in position and/or orientation. This may ensure that the pre-align is stable. It may also ensure that post-alignment, both for a user, but also for the manufacturer, is not required.

A tunable supercontinuum system that is alignment-free for the user has only previously been possible to provide using complex automated alignment-systems relying on optical feedback. Such alignment-systems may be problematic as the alignment-algorithms thereof, or the feedback-mechanisms thereof, may not be optimal. The present disclosure overcomes such problems.

As described above, the present disclosure provides a simple and user-friendly tunable supercontinuum module, particular by integrating the supercontinuum-module, the first filter-module and the guiding optics inside the supercontinuum-housing, and pre-aligning the guiding optics.

### Brief description of the drawings

The above and/or additional objects, features and advantages of the present disclosure, will be further described by the following illustrative and non-limiting detailed description of embodiments of the present disclosure, with reference to the appended drawing(s), wherein:

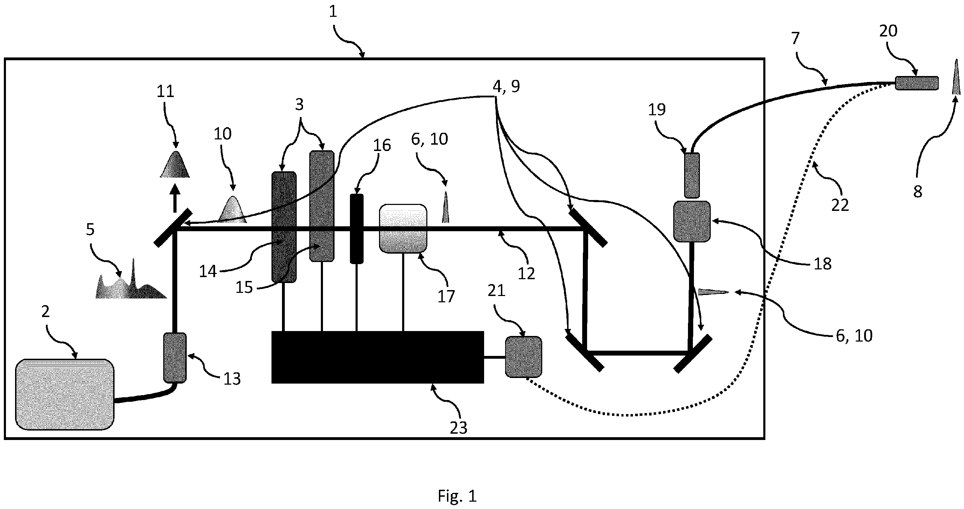

Fig. 1 shows an example of the tunable laser device according to the present disclosure.

### Detailed description

### First filter-module and delivery-fiber

In one embodiment the first filter-module delivers a beam with a width that is matched to a mode field diameter of the delivery-fiber. This may provide optimal coupling into the delivery-fiber.

In another embodiment, the beam is collimated. The beam is preferably collimated before it enters the first filter-module. Since the first filter-module may not change the collimation, the beam may maintain its collimation after passing through the filter. Accordingly, in one embodiment, the beam is collimated before it is coupled into the delivery-fiber. The beam may be coupled into an input-coupler optically connected to an initial input-end of the delivery-fiber. In one embodiment, and by the pre-alignment according to the present disclosure, the input-end of the delivery-fiber is optically connected to the supercontinuum-module. Having a collimated beam before input-coupling into the delivery-fiber may provide optimal coupling into the delivery-fiber, for example if the input coupler is an input-collimator.

In another embodiment, the beam is diverging or converging before it enters the first filter-module. Since the filter may not change the divergence or convergence, the beam preferably maintains its divergence or convergence after passing through the filter. Accordingly, in one embodiment, the beam is converging or diverging before it is coupled into the delivery-fiber. The beam may be coupled into an input-coupler optically connected to an initial input-end of the delivery-fiber. In one embodiment, and by the pre-alignment according to the present disclosure, the input-end of the delivery-fiber is optically connected to the supercontinuum-module. Having a diverging or converging beam before input-coupling into the delivery-fiber may provide non-optimal coupling into the delivery-fiber, for example if the input coupler is an input-collimator. Accordingly, to provide a collimated beam before input-coupling into the delivery-fiber, there may be collimating optics located between the first filter-module and the delivery-fiber. The collimating optics may, in one embodiment, be a second filter-module as will be described in the next section "second filter-module".

In one embodiment, the supercontinuum light has a broad spectrum being defined in a wavelength-range that spans at least from 400 nm to 1000 nm, preferably from 400 nm to 2000 nm, more preferably from 400 nm to 2400 nm. According to the present disclosure, the super continuum system comprises a delivery-fiber for delivering the supercontinuum light, or a part thereof, through the delivery-fiber from an initial input-end to a final output-end. This means that the delivery-fiber, in the here described embodiment, is configured to deliver light with wavelengths ranging from at least 400 nm to 1000 nm, preferably from 400 nm to 2000 nm, more preferably from 400 nm to 2400 nm. The range(s) as here specified is/are thus not a limitation as such on the supercontinuum light source, or the supercontinuum-module, but more a requirement to the delivery-fiber. Accordingly, in one embodiment, the delivery-fiber is configured to deliver supercontinuum light having a broad spectrum being defined in a wavelength-range that spans at least from 400 nm to 1000 nm, preferably from 400 nm to 2000 nm, more preferably from 400 nm to 2400 nm, or a part thereof, through the delivery-fiber from an initial input-end to a final output-end.

In relation to the above embodiment, the first part of the spectrum may be filtered from 400 nm to 700 nm, or from 400 nm to 1000 nm, more preferably from 400 nm to 1100 nm, even more preferably from 400 nm to 1200 nm, or alternatively from 400 nm to 1800.

In some embodiments, the first filter-module is configured to provide a part of the supercontinuum light in the form of a bandwidth-filtered signal having a wavelength with a narrow bandwidth from around 5 nm to 10 nm, preferably less than 7 nm, such as from 5 nm to around 7 nm. This means that if the supercontinuum system generates light having a broad spectrum as defined above, for example from 400 nm to 1000 nm, then the first filter-module is configured to bandwidth-filter this light and produce a wavelength or a wavelength range in the defined range of the broad spectrum. Accordingly, by using the first filter-module, it is possible to tune the supercontinuum system, as here defined, and output a desired wavelength within the broad spectrum as generated by the supercontinuum-module. Further, with the first filter-module as here described, and according to the present disclosure, the delivery-fiber is in one embodiment configured to deliver supercontinuum light having a broad spectrum being defined in a wavelength-range that spans at least from 400 nm to 1000 nm, preferably from 400 nm to 2000 nm, more preferably from 400 nm to 2400 nm, in particular a part thereof, where the part thereof is the bandwidth-filtered signal.

The bandwidth-filtered signal may, according to the herein defined embodiment, have a wavelength with a narrow bandwidth from around 5 nm to 10 nm, preferably less than 7 nm, such as from 5 nm to around 7 nm.

According to the present disclosure, the bandwidth-filtered signal, within the broad spectrum as defined above, is delivered through the delivery-fiber, particularly from an initial input-end to a final output-end.

Further, according to the present disclosure, the bandwidth-filtered signal is centered around a wavelength.

The bandwidth-filtered signal may be defined by a narrow bandwidth of less than 7 nm, where it has a minimum transmission of more than 20%. The transmission may by a different definition be more than 50%, and such as more than 70%. A preferred definition is however such that the bandwidth-filtered signal is defined by a narrow bandwidth of less than 7 nm, where it has a minimum transmission of more than 80%.

Accordingly, the bandwidth-filtered signal, as centered around a wavelength, is preferably defined to have a transmission of more than 80%. Since the first filter-module operates on the generated supercontinuum light having a broad spectrum, the bandwidth-filtered signal, as centered around a wavelength within the broad spectrum, is preferably defined to have a transmission of more than 80% for all the wavelengths in the broad spectrum, such as defined to be at least from 400 nm to 1000 nm.

The transmission as described above may be defined as the transmission through the filter-module, and/or as the transmission through the delivery-fiber.

In a preferred embodiment, the first filter-module comprises two continuously variable filters that are moved and/or tuned relative to each other, the two variable filters comprising a first variable filter in the form of a long-wave pass-filter, and a second filter in the form of a short-wave pass-filter, whereby the bandwidth is controllable.

By being able to control the bandwidth, the user of the supercontinuum-system is provided full flexibility of the tunability and may use the supercontinuum-system for a wide range of applications and external samples and/or external devices.

For example, in a setup where the supercontinuum system is used for an external device being an external spectrometer that receives the supercontinuum light from an external sample, which is illuminated by the supercontinuum system as herein disclosed, a control of the bandwidth is desirable.

A first filter-module as here described may be advantageous over other filter-modules because the two variable filters may be configured to cover a very broad range of wavelengths, such as the broad spectrum ranging from at least 400 nm to 1000 nm, from 400 nm to 2000 nm, and even from 400 nm to 2400 nm. It is known that using two variable filters as described above are relatively large. It is also well-known that the broader the spectrum is filtered, the larger the filter-module. Accordingly, integrating the first filter-module in the form as here described is not an obvious choice in an integrated solution. Furthermore, since the variable filters are moved, the filters may interfere with the other parts inside the supercontinuum-housing, such as the supercontinuum housing. For this reason, integrating the first filter-module in the form as here described is not trivial. However, the inventors of the present disclosure have found that it is possible to use two variable filters in an integrated supercontinuum-housing, particularly to provide the desired broad filter-range. Details on a solution to integrate the first filter-module is described in the following.

In one embodiment, the first filter-module comprises a motor for each of the two variable filters. In another embodiment, the first filter-module is located in a cage, wherein the cage is located inside the supercontinuum-housing. In a preferred embodiment, the first filter-module and/or the cage therefor, is mounted inside the supercontinuum-housing such that it is mechanically decoupled from the supercontinuum-module. In a more preferred embodiment, the first filter-module and/or the cage therefor, is mounted inside the supercontinuum-housing with springs such that it is mechanically decoupled from the supercontinuum-module. The first filter-module and/or the cage therefor may preferably be attached to the springs, such that the first filter-module and/or the cage therefor hangs freely inside the supercontinuum-housing. For compactness, the first filter-module and/or the cage therefor may be located above the supercontinuum-module. In a most preferred embodiment, the springs comprise dampers, such as rubber inside the springs, to improve the mechanical decoupling of the first filter-module, and/or the cage thereof, from the supercontinuum-module. The mechanical decoupling may be to reduce impact on the fiber coupling to the delivery-fiber, for example during transportation, but also during operation. The mechanical decoupling may also provide a stable fiber coupling to the delivery-fiber, particularly such that the fiber coupling is stable during use, particularly during operation of the first-filter module comprising two variable filters and/or one or more motor(s).

Instead of using two variable filters, other filter-modules may be used. For example, in another preferred embodiment, the first filter-module is one or more acousto-optical tunable filter(s) (AOTFs), and/or one or more volume Bragg grating(s). However, such filter-modules cannot be used to control the bandwidth, so it may be preferred to use two continuously variable filters that are moved relative to each other. However, if moving parts are not tolerated, and a narrow filter-range is acceptable, it may be preferred to use the one or more acousto-optical tunable filter(s) (AOTFs), and/or the one or more volume Bragg grating(s).

In relation to the preferred embodiment using two variable filters as described above, the tunable supercontinuum system may further comprise one or more blocking filter(s) located inside the supercontinuum-housing to further filter the first filtered light due to leakage from the two continuously variable filters. The one or more blocking filters may ensure sufficient out-of-band blocking, i.e. blocking of light that is non-desired.

In one embodiment, the delivery-fiber, or at least a part thereof, is located inside the supercontinuum-housing. Accordingly, the coupling of supercontinuum light into the delivery-fiber may be provided inside the supercontinuum-housing. Further, in the embodiment where at least a part of the fiber is located inside the supercontinuum housing, another part of the delivery-fiber is external to the supercontinuum-housing. In this manner, the other part of the delivery-fiber may be connected to an external device and/or external sample.

In one embodiment, the delivery-fiber is an endlessly single mode photonic crystal fiber that is configured to the deliver at least the first filtered light through the delivery-fiber.

The term "endlessly single mode" is well-understood in the field of fiber optics. It simply means single mode for all wavelengths. Accordingly, in relation to the present disclosure, it may in one embodiment mean that the delivery fiber is single mode for supercontinuum light having a broad spectrum being defined in a wavelength-range that spans at least from 400 nm to 1000 nm, preferably from 400 nm to 2000 nm, more preferably from 400 nm to 2400 nm. In practice, this may be difficult to achieve. Thus, in some embodiments, the endlessly single mode is a delivery-fiber that is single mode for at least about 50 %, such as at least about 80 % of the transmission bandwidth, such as for the entire transmission bandwidth of the delivery fiber.

The term "endlessly single mode" is further explained in the article "Endlessly single-mode photonic crystal fiber," by T. A. Birks, J. C. Knight, and P. St. J. Russell, Opt. Lett. 22, 961-963 (1997)". The endlessly single mode fiber(s) as described in the article is/are hereby incorporated by reference.

An example of another endlessly single mode fiber is disclosed in WO 2016/206700, also incorporated herein by reference.

In another and/or related embodiment, the delivery-fiber is a large mode area (LMA) fiber that is configured to deliver the supercontinuum light, or the part thereof, through the delivery-fiber. One type of a large mode area fiber may be an endlessly single mode fiber. Another type of a large mode area fiber may be rod. A large mode area fiber with a large cladding may provide a stiff fiber, and thus in some embodiments forming a rod. It may be advantageous to use a rod since it may avoid bend-induced losses.

Using a delivery-fiber as disclosed above, and in relation to the present disclosure, provides that the supercontinuum light, or the part thereof, is able to be delivered to the external sample and/or the external device with great transmission efficiency for all wavelengths within the spectrum of the supercontinuum light, regardless of it being the full spectrum, i.e. the full bandwidth of the supercontinuum light, or a bandwidth-filtered part thereof. Furthermore, when the delivery-fiber is an endlessly single-mode fiber, the light, such as in the range from 400-1000 nm, may to be delivered in a flexible manner and with low, or at least a very limited loss, preferably without loss, from the supercontinuum module to the final output-end of the delivery fiber, thus to the external device and/or external sample.

There may be other delivery-fibers that can be used to deliver supercontinuum light to an external sample and/or external device, such as for example the delivery-fiber in the form of a hollow core (HC)-PCF as disclosed in WO 2021/043593. However, the therein disclosed HC-PCF delivery-fiber may only guide a limited wavelength region, and/or it may not be single mode for all the wavelengths of interest.

An advantage of the endlessly single mode fiber as described in this disclosure, and to be used as the delivery-fiber for the supercontinuum system as here disclosed, is that endlessly single mode guides all the wavelengths of interest, and as single mode. When the endlessly single mode fiber is used with the tunable supercontinuum system as here disclosed, the combination may in one embodiment provide that the output from the delivery-fiber is diffraction-limited.

### Second filter-module

In one embodiment, the tunable supercontinuum system comprises a second filter-module located inside the supercontinuum-housing and configured to filter a second part of the supercontinuum light, wherein the second part of the supercontinuum light is different from the first part of the supercontinuum light, such that after filtering with the second filter-module, the tunable supercontinuum system is configured to generate the first filtered light and second filtered light inside the supercontinuum-housing, the second filtered light having at least one or more power-suppressed wavelength(s) within the second part of the supercontinuum light. The second part of the supercontinuum light, such as above 1000 nm, may affect a user's measurement, and therefore it may be advantageous to power-suppress the second part of the supercontinuum light.

In relation to the above embodiment, the second part of the supercontinuum light may be from 1200 nm to 2000 nm or to 2400 nm, more preferably from 1100 nm to 2000 nm or to 2400 nm, even more preferably from 1000 nm to 2000 nm or to 2400 nm, or alternatively from above 1800 nm, such as from around 1800 nm to 2000 nm or such as from around 1800 nm to 2400 nm.

In a preferred embodiment, the guiding optics forms the second filter-module. An advantage of this embodiment, i.e. where the guiding optics has two purposes and/or functions, is that it allows for a more compact supercontinuum system.

In a more preferred embodiment, the second filter-module comprises a plurality of dichroic mirrors, preferably two mirrors, more preferably three mirrors, or most preferably four mirrors. Using two mirrors in series may result in approximately twice the suppression of a single mirror. Accordingly, to provide a very high suppression, three or four mirrors, may advantageously be connected in series.

A dichroic mirror is a mirror that reflects only a specific spectral part of the light, while transmitting some of the rest, and may be made with very thin metal layers or suitable combinations of dielectric layers. In a most preferred embodiment, each of the plurality of mirrors is configured as a beam splitter. A cold mirror is a dichroic mirror that efficiently reflects the entire visible light spectrum while transmitting infrared wavelengths.

Accordingly, a plurality of cold mirrors may be used to efficiently filter out infrared wavelengths, for example as described in the embodiment, where the second part of the supercontinuum light may be from 1200 nm to 2000 nm or to 2400 nm, more preferably from 1100 nm to 2000 nm or to 2400 nm, even more preferably from 1000 nm to 2000 nm or to 2400 nm, or alternatively from above 1800 nm, such as from around 1800 nm to 2000 nm or such as from around 1800 nm to 2400 nm.

### Other parts of the tunable supercontinuum system

In most embodiments, the delivery-fiber comprises a fiber coupler, such as an input coupler connected at an initial input-end of the delivery-fiber, and such as an output coupler connected at a final output-end of the delivery-fiber.

In a most preferred embodiment, the supercontinuum system further comprises a coupling mechanics located inside the supercontinuum housing, wherein the coupling mechanics holds a fiber coupler for the delivery-fiber, and wherein the coupling mechanics is configured to couple at least the first filtered light into the delivery-fiber. Most preferably, coupling mechanics is a fiber coupler manipulator. The fiber coupler manipulator may be configured to be locked in orientation and/or position such that the fiber coupling can be maintained.

The coupling mechanics may be configured to be manipulated, or pre-aligned, inside the supercontinuum-housing such that the coupling into the delivery-fiber is provided. Once the coupling mechanics is manipulated, or pre-aligned, such that coupling into the delivery fiber is provided and an output signal is optimized, the coupling mechanics may be locked in orientation and/or position whereby the fiber coupling is maintained. In this manner, an alignment-free tunable supercontinuum system for the user may also be provided.

In another preferred embodiment, the tunable supercontinuum system comprises a spectrometer located inside the supercontinuum-housing and configured to measure the spectrum of the first filtered light. Placing a spectrometer inside the supercontinuum-housing, where the supercontinuum-module is also placed together with the first filter-module and the guiding optics, may be advantageous because it provides an all-in-one solution. Accordingly, the present disclosure provides an integrated solution where both the filter-module and the spectrometer may be optimized for the user, such that the user is not required to combine a supercontinuum module with any additional devices, and where the user is also not required to align any optical elements. By having the spectrometer integrated as described above, the user is also able to observe both the output power and the spectral power of the first filtered light, particular without having to set up an external spectrometer. All in all, the integrated tunable supercontinuum system as disclosed herein is easy to use for users that may have little or no experience with optics and/or supercontinuum modules and/or lasers.

The presently disclosed tunable supercontinuum system may have applications in life science, such as fluorophore excitation, and/or fluorescence microscopy, and/or FLIM. The presently disclosed tunable supercontinuum system may further have applications in metrology, such as optical characterization and/or measurement of nanostructures. The presently disclosed tunable supercontinuum system may even further have applications in material science, such as photovoltaics, and/or plasmons, and/or spectroscopy.

### Example 1

**Fig. 1** shows an example of an embodiment of the tunable supercontinuum system **1** according to the present disclosure. **Fig. 1** shows a tunable supercontinuum system, comprising: a supercontinuum-housing **1.**

The supercontinuum-housing integrates a supercontinuum-module **2**, a first filter-module **3**, and guiding optics **4** into the supercontinuum-housing **1.**

In this manner, the supercontinuum-housing **1** comprises: the supercontinuum-module **2** configured to generate supercontinuum light **5**; and the first filter-module **3** configured to dynamically filter a first part of the supercontinuum light **5**, such that after filtering with the first filter-module **3**, the tunable supercontinuum system is configured to generate first filtered light **6**, wherein the first filtered light **6** has a filtered wavelength within the first part of the supercontinuum light **5**, and the filtered wavelength has a minimum bandwidth and a minimum transmission, whereby the first filter-module **3** provides the tunable supercontinuum system.

The guiding optics, here shown as four mirrors, particularly four dichroic mirrors, is for guiding at least the first filtered light **6** towards a delivery-fiber **7.**

As can be seen from **Fig. 1**, the delivery-fiber provides an output **8** for at least the first filtered light **6.**

The guiding optics **4** is configured to be pre-aligned inside the supercontinuum-housing **1** such that the output **8** through the delivery-fiber **7** is provided.

In this example, the supercontinuum system comprises a second filter-module **9** located inside the supercontinuum-housing and configured to filter a second part of the supercontinuum light **5**, wherein the second part of the supercontinuum light **5** is different from the first part of the supercontinuum light **5**, such that after filtering with the second filter-module **9**, the tunable supercontinuum-system is configured to generate the first filtered light **6** and second filtered light **10** inside the supercontinuum-housing **1**, the second filtered light **10** having at least one or more power-suppressed wavelength(s) within the second part of the supercontinuum light **5.**

Further, in this example, as indicated by the colors of the supercontinuum light **5** in **Fig. 1**, the supercontinuum light has a broad spectrum, such as being defined in a wavelength-range that spans at least from 400 nm to 1000 nm, and above 1000 nm, such that broad spectrum is ranging from for example 1000 nm to 2000 nm. The broad spectrum covers the visible and the infrared domain.

The first part of the spectrum is filtered from 400 nm to 1000 nm, using the first filter-module **3**, while the second part of the supercontinuum light is filtered from 1000 nm to 2000 using the second filter-module **9.**

As can also be seen from **Fig. 1**, the guiding optics **4** forms the second filter-module **9.**

A first part of the guiding optics **4,** and in this example, a first part of the second filter-module **9**, is located before the first filter-module **3**, and a second part of the guiding optics **4** is located after the first filter module **3.** In this manner, the supercontinuum system is made very compact and without the use of additional guiding elements. The first part of the guiding optics **4** and the first part of the second filter-module **9** is a first dichroic mirror that filters out infrared light **11**, in this example the light with wavelengths from 1000 nm to 2000 nm. Accordingly, the first dichroic mirror is a cold mirror since it reflects the entire visible light spectrum while transmitting infrared wavelengths. In this manner, the second filtered light **10** is filtered light having at least one or more power-suppressed wavelength(s), namely the light with wavelength(s) in the infrared domain, within the second part of the supercontinuum light **5.** By using four dichroic mirrors as shown in this example, the power-suppression of the wavelength(s) in the infrared domain is about and/or more than 40 dB.

In the present example, the first filter-module **3** delivers a beam **12** with a width that is matched to a mode field diameter of the delivery-fiber **7.** The beam **12** as shown in the present example is collimated, wherein the collimation is provided by a collimator **13** that is connected to the supercontinuum module **2.** In other words, the supercontinuum-module **2** is configured to provide a beam **12** that travels through the supercontinuum system and inside the supercontinuum housing. The beam **12** is in a preferred embodiment a pulsed beam, for example provided by a repetition rate between 70 and 80 Hz, such as 78 Hz. The collimation of the beam is maintained as the beam travels through the first filter-module **3**, the guiding optics **4**, here in the form of a second filter-module **9**, and through other parts of the supercontinuum system as will be described further below.

As can be seen from **Fig. 1**, the first filter-module **3** comprises two continuously variable filters (**14, 15**) that are moved relative to each other, the two variable filters (**14, 15**) comprising a first variable filter **14** in the form of a long-wave pass-filter, and a second filter **15** in the form of a short-wave pass-filter, whereby the minimum bandwidth is controllable. The minimum bandwidth may be adjusted to be between 5 nm to 10 nm. However, the tunable supercontinuum system, particularly the two variable filters (**14, 15**) are configured to be moved and/or tuned such that a maximum bandwidth up to 50 nm is achieved. In this manner, a user may, for example in a user-interface, select any desired bandwidth between 5 nm and 50 nm within the range of the spectral coverage between 400 nm and 1000 nm. Furthermore, the tunable supercontinuum system, particularly the two variable filters (**14, 15**), particularly the one or motorized stage(s) to move the two variable filters are configured such that the range of the spectral coverage between 400 nm and 1000 nm is tunable with a step size of less than 0.5 nm, such as less than 0.3 nm, such as around or less than 0.1 nm. The one or more motorized stage(s) are configured to provide a wavelength accuracy of ± 1 nm. In this manner, the present disclosure, as exemplified here, provides a close to gap-free tuning from 400 nm to 1000 nm. The tunable supercontinuum system, in particular the supercontinuum module **2** is configured to provide an output power that is around or more than 1 mW per line with a bandwidth of 5-10 nm, such that the tunable supercontinuum system is operable without the need for adjustment, alignment, or calibration. The power stability of the tunable supercontinuum system as here disclosed is within 1% over 1 hour. Furthermore, the tunable supercontinuum system, particularly the one or motorized stage(s) to move the two variable filters (**14, 15**) are configured such that the spectral coverage between 400 nm and 1000 nm is scannable within 1 second. Accordingly, the presently disclosed tunable supercontinuum system is a compact system that is easy to operate and provides a fast tuning over a large spectral range.

In the present example as shown in **Fig.** 1, the tunable supercontinuum system further comprises one or more blocking filter(s) **16** located inside the supercontinuum-housing 1 to further filter the first filtered light **6**, for example due to leakage from the two continuously variable filters (**14, 15**). Further, the supercontinuum system comprises an attenuation filter **17,** for example in the form of a neutral density filter.

The supercontinuum system further comprises a fiber coupler manipulator **18** located inside the supercontinuum housing **1**, wherein the fiber coupler manipulator **18** holds a fiber coupler **19** for the delivery-fiber **7,** and wherein the fiber coupler manipulator **18** is configured to couple at least the first filtered light **6** into the delivery-fiber **7.** At a final output-end of the delivery-fiber is an output-coupler **20** optically connected to the final output-end of the delivery fiber **7.** In this example, the output-coupler **20** is an output-collimator. Accordingly, the output **8,** from the output-coupler **20,** is collimated. Being collimated is defined by a degree a collimation, and in this example, the degree of collimation is such that the beam divergence is less than 3 mrad, such as less than 2 mrad, such as less than 1.5 mrad. Furthermore, the beam divergence and the beam diameter are related so a large beam has a low divergence, and vice versa. Since the beam divergence also depends on the wavelength, the beam width varies across the spectral range. For example, the beam diameter is 0.7 mm at a wavelength of 500 nm, whereas the beam diameter is 1.4 mm at a wavelength of 1000 nm. This also means that the first filter-module **3**, both in this example and in an embodiment of the present disclosure, is configured to filter a beam that varies in diameter between 0.5 mm and 2 mm, such as varying between 0.5 mm and 1.5 mm. The two variable filters as described in this example is an example of a first filter-module **3** that accepts such a variation. Furthermore, it also means that the second filter-module **9,** both in this example and in an embodiment of the present disclosure, is configured to filter a beam that varies in diameter between 0.5 mm and 2 mm, such as varying between 0.5 mm and 1.5 mm. The four dichroic mirrors **4** as described in this example is an example of a second filter-module **9** that accepts such a variation.

In this example, the delivery-fiber **7** is an endlessly single mode photonic crystal fiber that is configured to the deliver at least the first filtered light **6**, but also the second filtered light **10,** through the delivery-fiber. However, the second filtered light, is power-suppressed by the second filter-module **9,** so in practice, the second filter light **10,** is not delivered through the delivery-fiber. However, because the delivery-fiber is configured to deliver the second filtered light, even if not fully suppressed, it means that the supercontinuum system may work without the second filter module **9.** In such an embodiment, the tunable supercontinuum system may for example be configured to provide a tunable supercontinuum system that is tunable into the infrared region, for example ranging from 400 nm to 1200 nm, or even up to 1800 nm or 2400 nm.

The tunable supercontinuum system as shown in this example further comprises a spectrometer **21** located inside the supercontinuum-housing **1** and configured to measure the spectrum of the first filtered light **6.** The spectrometer **21** receives an input signal from the output-coupler **20** via a feedback-fiber **22**, such that the output **8** from the output-coupler is mirrored to the spectrometer **21.** As shown in this example, the spectrometer is located inside the supercontinuum housing **1** to provide a practical all-in-one integrated system, but the spectrometer **21** may not need to be located inside the supercontinuum housing **1.**

Finally, the tunable supercontinuum system, as shown in **Fig. 1**, further comprises a control-module **23** connected to one or more motorized stage(s) (not shown) configured to hold the two variable filters (**14, 15**), such that the two variable filters (**14, 15**) are controlled by the control-module **23.** The control-module **23** receives input from the spectrometer **21.** In this manner, the output **8** from the supercontinuum system is fed back to the control-module **23** via the output-coupler **20,** the feedback-fiber **22,** and the spectrometer **21.** The control-module **23** as shown here, is also used to control the attenuation filter **17.**

## Claims

1. A tunable supercontinuum system, comprising:
- a supercontinuum-housing that integrates a supercontinuum-module, a first filter-module, and guiding optics into the supercontinuum-housing, such that the supercontinuum-housing comprises:
∘ the supercontinuum-module configured to generate supercontinuum light;
∘ the first filter-module configured to dynamically filter a first part of the supercontinuum light, such that after filtering with the first filter-module, the tunable supercontinuum system is configured to generate first filtered light, wherein the first filtered light has a filtered wavelength within the first part of the supercontinuum light, and the filtered wavelength has a minimum bandwidth and a minimum transmission, whereby the first filter-module provides the tunable supercontinuum system; and
∘ the guiding optics for guiding at least the first filtered light towards a delivery-fiber,
wherein the delivery-fiber is for providing an output for at least the first filtered light, and
wherein the guiding optics is configured to be pre-aligned inside the supercontinuum-housing such that the output through the delivery-fiber is provided.

2. The tunable supercontinuum system according to claim 1, wherein said system comprises a second filter-module located inside the supercontinuum-housing and configured to filter a second part of the supercontinuum light, wherein the second part of the supercontinuum light is different from the first part of the supercontinuum light, such that after filtering with the second filter-module, the tunable supercontinuum-system is configured to generate the first filtered light and second filtered light inside the supercontinuum-housing, the second filtered light having at least one or more power-suppressed wavelength(s) within the second part of the supercontinuum light.

3. The tunable supercontinuum system according to claim 2, wherein the guiding optics forms the second filter-module.

4. The tunable supercontinuum system according to any of the preceding claims, wherein the second filter-module comprises a plurality of dichroic mirrors, preferably two mirrors, more preferably three mirrors, or most preferably four mirrors.

5. The tunable supercontinuum system according to any of the preceding claims, wherein the first filter-module delivers a beam with a width that is matched to a mode field diameter of the delivery-fiber.

6. The tunable supercontinuum system according to claim 5, wherein the beam is collimated.

7. The tunable supercontinuum system according to any of the preceding claims, wherein the supercontinuum light has a broad spectrum, the broad spectrum being defined in a wavelength-range that spans at least from 400 nm to 1000 nm, preferably from 400 nm to 2000 nm, more preferably from 400 nm to 2400 nm.

8. The tunable supercontinuum system according to claim 8, wherein the first part of the spectrum is filtered from 400 nm to 700 nm, or from 400 nm to 1000 nm, more preferably from 400 nm to 1100 nm, even more preferably from 400 nm to 1200 nm, or alternatively from 400 nm to 1800.

9. The tunable supercontinuum system according to claim 2 and claim 8, wherein the second part of the supercontinuum light is from 1200 nm to 2000 nm or to 2400 nm, more preferably from 1100 nm to 2000 nm or to 2400 nm, even more preferably from 1000 nm to 2000 nm or to 2400 nm, or alternatively from above 1800 nm, such as from around 1800 nm to 2000 nm or such as from around 1800 nm to 2400 nm.

10. The tunable supercontinuum system according to any of the previous claims, wherein the first filter-module comprises two continuously variable filters that are moved relative to each other, the two variable filters comprising a first variable filter in the form of a long-wave pass-filter, and a second filter in the form of a short-wave pass-filter, whereby the minimum bandwidth is controllable.

11. The tunable supercontinuum system according to claim 10, wherein the tunable supercontinuum system further comprises one or more blocking filter(s) located inside the supercontinuum-housing to further filter the first filtered light due to leakage from the two continuously variable filters.

12. The tunable supercontinuum system according to any of the preceding claims, wherein the first filter-module comprises one or more volume Bragg grating(s), or one or more acousto-optical tunable filter(s).

13. The tunable supercontinuum system according to any of the preceding claims, wherein the supercontinuum system further comprises a fiber coupler manipulator located inside the supercontinuum housing, wherein the fiber coupler manipulator holds a fiber coupler for the delivery-fiber, and wherein the fiber coupler manipulator is configured to couple at least the first filtered light into the delivery-fiber.

14. The tunable supercontinuum system according to any of the preceding claims, wherein the delivery-fiber is an endlessly single mode photonic crystal fiber that is configured to the deliver at least the first filtered light through the delivery-fiber.

15. The tunable supercontinuum system according to any of the preceding claims, wherein the tunable supercontinuum system comprises a spectrometer located inside the supercontinuum-housing and configured to measure the spectrum of the first filtered light.
